# EUROPEAN PATENT SPECIFICATION

(11) **EP 3 157 198 B1**
(45) Date of publication and mention of the grant of the patent: **06.07.2022**
(21) Application number: 16181657.4
(22) Date of filing: 28.07.2016
(51) Int. Cl.: H04L 12/28, H04L 12/06

(54) **METHOD AND APPARATUS FOR NETWORK CONNECTION**
VERFAHREN UND VORRICHTUNG FÜR NETZWERKVERBINDUNG
PROCÉDÉ ET APPAREIL DE CONNEXION DE RÉSEAU

(30) Priority: 12.10.2015 CN 201510660883
(43) Date of publication of application: 19.04.2017
(73) Proprietor: Xiaomi Inc., Beijing 100085 (CN)
(72) Inventor: QIAN, Zhuang, Haidian District Beijing 100085 (CN); CHEN, Yong, Haidian District Beijing 100085 (CN); ZHANG, Xibei, Haidian District Beijing 100085 (CN)
(74) Representative: Millburn, Julie Elizabeth

(56) References cited:
- EP-A1- 2 875 680
- WO-A1-2010/130191
- WO-A2-03/093951
- US-A1- 2011 047 603

## Description

### TECHNICAL FIELD

The present disclosure generally relates to the Internet technical field, and more particularly, to a method and apparatus for network connection.

### BACKGROUND

One of the functions of smart routers is that a user can manage and access data in the routers by application programs anywhere and anytime. However, due to the limitation of upload band width of external networks, the speeds for accessing router data via internal networks and external networks are totally different, usually one to two orders of difference. With the proliferation of wireless network technology in people's life, there are some other WIFI hotspots surrounding a user in addition to the router managed by the user himself/herself (hereinafter "self-router"). This may result in that even if the user is in the proximity of the self-router, it is not necessary that the user can access the self-router. Thus, the user has to access the data stored in the self-router via the external networks, and the accessing speed is reduced or experience of other users may be influenced. With respect to this problem, the user may search whether the self-router is in the proximity by application programs on a terminal; if the self-router is in the proximity of the user, the user may select to rc-acccss the self-router and thereby to access the router data via the internal networks. However, for some systems such as iOS system, the installed application programs have no permission to search the nearby WIFI and thus switching to the internal networks cannot be realized by this approach.

WO2010130191A1 discloses an authentication method of switching access networks, system and device thereof are disclosed, in which the method includes: a terminal sends a switching request to a switching server by a WLAN access network, in which the switching request contains a WiFi access point ID and/or a target WiMAX base-station ID to be switched; the terminal receives a switching response of the switching server by the WLAN access network; the terminal authenticates the target WiMAX access network by the WLAN access network and the switching server.

WO03093951 discloses a command and control center (CCC) that is generally associated with the wireless network, wherein the CCC manages and controls the access points associated with the wireless network. Control frames (MMPDUs, in the case of 802.11 networks) received by the access point can be automatically transferred to the CCC, which thereafter transfers a response back to the access point, thereby granting or denying access to the wireless network to users thereof based on the response transferred from the CCC. The CCC manages radio monitoring to generate a radio mapping of the wireless network and the radio environment thereof based on data received from the access points. A firewall is generally located between the CCC and a visitor gateway. The visitor gateway can communicate with the Internet and restrict access to the wireless network by a visiting user through or from the remote computer network. A plurality of clients can be separated into one or more client groups, with each client group possessing a shared key for accessing networks partitioned from the access point using broadcast frames and encryption. The CCC can arrange the network such that clients ignore broadcast packets for other than its subnetwork.

### SUMMARY

The invention is defined in the independent claims, to which the reader is now directed. Preferred or advantageous embodiments are set out in the dependent claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for network connection according to an exemplary embodiment.
Fig. 2 is a flowchart showing step S12 in the method for network connection according to an exemplary embodiment.
Fig. 3 is a flowchart showing step S122 in the method for network connection according to an exemplary embodiment.
Fig. 4 is a flowchart showing step S33 in the method for network connection according to an exemplary embodiment.
Fig. 5 is a flowchart showing step S122 in the method for network connection according to an exemplary embodiment.
Fig. 6 is a flowchart showing a method for network connection according to an exemplary embodiment.
Fig. 7 is a flowchart showing a method for network connection according to an exemplary embodiment.
Fig. 8 is a flowchart showing a method for network connection according to an exemplary embodiment.
Fig. 9 is a flowchart showing a method for network connection according to a specific embodiment.
Fig. 10 is a diagram showing an interface for displaying notification information on a terminal in a method for network connection according to a specific embodiment.
Fig. 11 is a flowchart showing a method for network connection according to a specific embodiment.
Fig. 12 is a block diagram showing an apparatus for network connection according to an exemplary embodiment.
Fig. 13 is a block diagram showing an apparatus for network connection according to an exemplary embodiment.
Fig. 14 is a block diagram showing a determination module in the apparatus for network connection according to an exemplary embodiment.
Fig. 15 is a block diagram showing a determination module in the apparatus for network connection according to an exemplary embodiment.
Fig. 16 is a block diagram showing a notification module in the apparatus for network connection according to an exemplary embodiment.
Fig. 17 is a block diagram showing an apparatus for network connection according to an exemplary embodiment.
Fig. 18 is a block diagram showing an apparatus for network connection according to an exemplary embodiment.
Fig. 19 is a block diagram showing a second obtaining module in the apparatus for network connection according to an exemplary embodiment.
Fig. 20 is a block diagram showing a second obtaining module in the apparatus for network connection according to an exemplary embodiment.
Fig. 21 is a block diagram showing an apparatus for network connection according to an exemplary embodiment.
Fig. 22 is a block diagram showing a third obtaining module in the apparatus for network connection according to an exemplary embodiment.
Fig. 23 is a block diagram showing a third sending module in the apparatus for network connection according to an exemplary embodiment.
Fig. 24 is a block diagram showing a third sending module in the apparatus for network connection according to an exemplary embodiment.
Fig. 25 is a block diagram showing a third sending module in the apparatus for network connection according to an exemplary embodiment.
Fig. 26 is a block diagram showing an apparatus for network connection according to an exemplary embodiment.
Fig. 27 is a block diagram showing an apparatus for network connection according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure.

The technical solutions provided by embodiments of the present disclosure involve three parties, i.e., a network side, a preset network connection device and a terminal. The network side is configured to receive network information sent from the terminal and network information sent from the preset network connection device, and determine whether the terminal is in the proximity of the preset network connection device corresponding to the terminal according to the network information sent from the terminal and network information sent from the preset network connection device. The preset network connection device is configured to detect network information of nearby network connection devices, and send the detected network information to the network side. The terminal is configured to send the network information of the network connection device to which the terminal is currently connected to the network side, and access the preset network connection device corresponding to the terminal after receiving notification information sent from the network side. By the technical solutions of the present disclosure, when the terminal is in the proximity of the preset network connection device corresponding to the terminal, the terminal can accurately access the preset network connection device. Thus, the present disclosure can avoid the situation where the terminal accesses the data in the preset network connection device corresponding to the terminal via external networks, and thereby increases the network communication speed of the terminal. Depending on the parties which perform the methods, three sets of methods for network connection are provided in embodiments of the present disclosure as below.

### Network Side

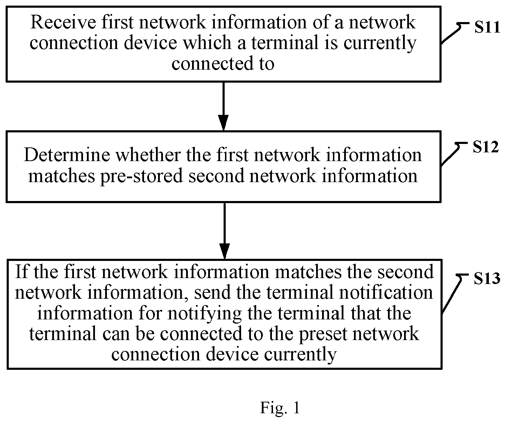

Fig. 1 is a flowchart showing a method for network connection according to an exemplary embodiment. As shown in Fig. 1, the method for network connection is applied at a network side and includes the following steps S11-S13.

In step S11, first network information of a network connection device which a terminal is currently connected to is received.

In step S12, whether the first network information matches pre-stored second network information is determined. The pre-stored second network information is network information of a network connection device within a preset range of a preset network connection device corresponding to the terminal.

In this step, the send network information is sent by the preset network connection device to the network side in advance. The network side may receive the second network information sent from the preset network connection device by the following approaches: periodically obtaining the second network information sent from the preset network connection device; and updating the second network information. By periodically updating the second network information, the network side can, according to the network information, more accurately determine whether the terminal is in proximity of a preset network connection corresponding to the terminal. In a database at the network side, each network connection device corresponds to the second network information sent by each network connection device.

In step S13, if the first network information matches the second network information, notification information is sent to the terminal. The notification information is configured to notify the terminal that the terminal can be connected to the preset network connection device currently.

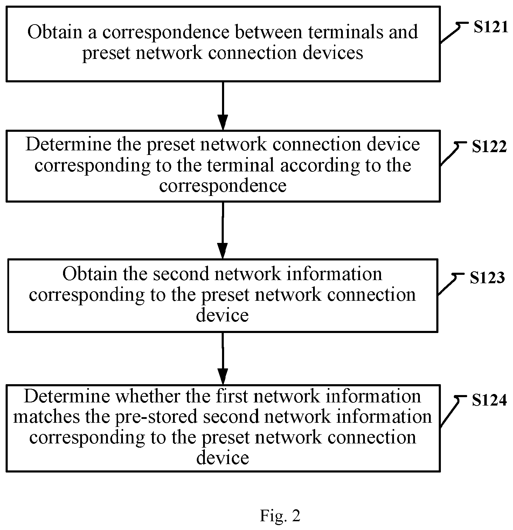

In an embodiment, as shown in Fig. 2, step S12 may be implemented by the following steps S121-S124.

In step S121, a correspondence between terminals and preset network connection devices is obtained.

In step 122, according to the above correspondence, the preset network connection device corresponding to the terminal is determined.

In step 123, the second network information corresponding to the preset network connection device is obtained.

In step 124, whether the first network information matches the pre-stored second network information corresponding to the preset network connection device is determined.

In the embodiment, the correspondence between terminals and preset network connection devices may be a correspondence between identities of terminals and network names of preset network connection devices, or may be a correspondence between identities of terminals and network addresses of preset network connection devices. The implementation of step S122 will be explained below using the two correspondences.

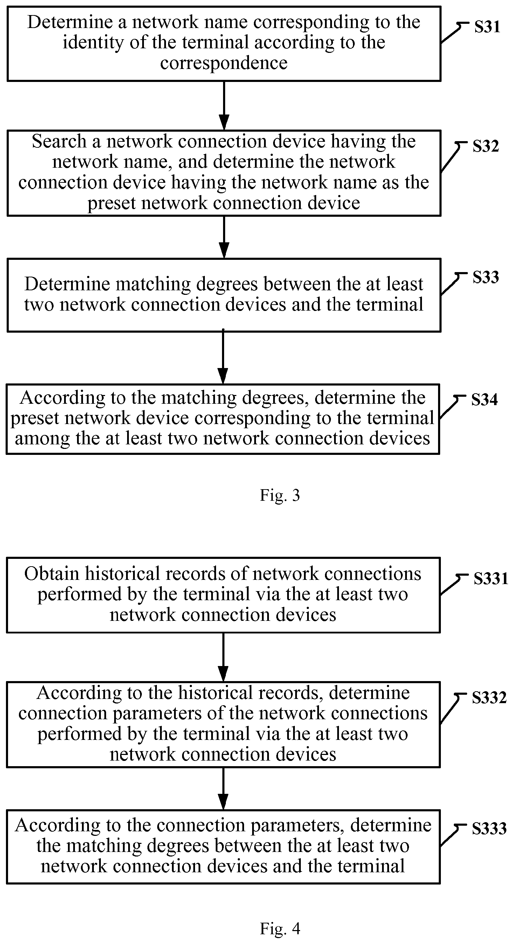

In an embodiment, when the correspondence between terminals and preset network connection devices is the correspondence between identities of terminals and network names of preset network connection devices, step S122 may be implemented as steps S31-S32 as shown in Fig. 3.

In step S31, according to the correspondence, a network name corresponding to an identity of the terminal is determined.

In the step, the first network information received by the network side includes the identity of the terminal, and thus the network name corresponding to the terminal identity can be determined according to the correspondence between identities of terminals and network names. Because a plurality of network connection devices may have the same network name, more than one network connection device may be found according to the correspondence between identities of terminals and network names of preset network connection devices. For example, the network name of the preset network connection device corresponding to the terminal is "TP_LINK", and in the database at the network side, other network connection devices may also have the network name "TP_LINK".

In step S32, a network connection device having the network name corresponding to the terminal identity is searched, and the network connection device having the network name is determined as the preset network connection device

In the step, when at least two network connection devices having the network name corresponding to the terminal identity are found, it is further needed to accurately determine the preset network connection device corresponding to the terminal among the plurality of network connection devices. At this time, step S122 may further include the steps S33-S34 as shown in Fig. 3.

In step S33, matching degrees between the at least two network connection devices and the terminal are determined.

Step S33 may be implemented by steps S331-S333 as shown in Fig. 4.

In step S331, historical records of network connections performed by the terminal via the at least two network connection devices are obtained.

In step S332, according to the historical records, connection parameters of the network connections performed by the terminal via the at least two network connection devices are determined. The connection parameters include any one or more of number of times of connection, connection frequency, and connection speed.

In step S333, according to the connection parameters, the matching degrees between the at least two network connection devices and the terminal are determined. The number of times of connection, connection frequency, and connection speed can be in proportion to the matching degree. For example, a greater number of times of connection indicates a higher matching degree between the network connection device and the terminal. The matching degree can reflect the closeness rating between the network connection device and the terminal.

In step S34, according to the matching degrees, the preset network device corresponding to the terminal is determined among the at least two network connection devices.

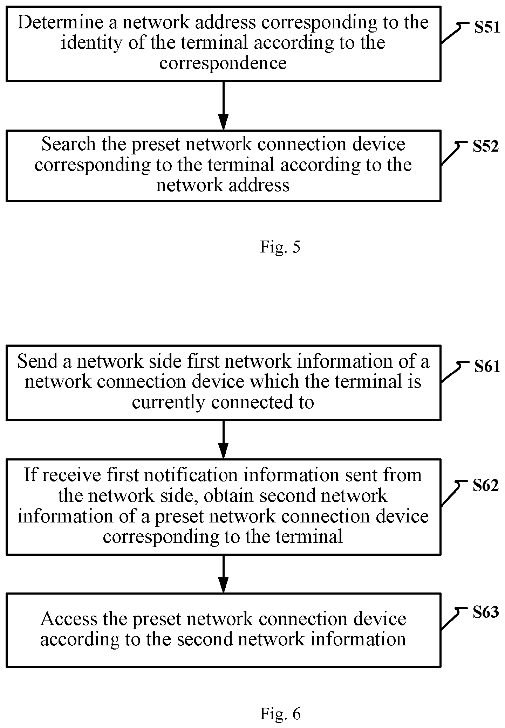

In another embodiment, when the correspondence between terminals and preset network connection devices is a correspondence between identities of terminals and network addresses of preset network connection devices, step S122 may be implemented by steps S51-S52 as shown in Fig. 5.

In step S51, a network address corresponding to the identity of the terminal is determined according to the corrcspondcncc.

In step S52, the preset network connection device corresponding to the terminal is searched according to the network address.

In the embodiment, the nctowrk address may be a Media Access Control (MAC) address, or may be an Internet Protocol (IP) address. For example, if the netowrk address is the MAC address, each netowrk connection device has an unique MAC address. Thus, accroding to the correspndance between identities of terminals and MAC addressess of preset network connection devices, an unique netowrk connection device corresponding to the identity of the terminal (i.e., the preset network connection device corresponding to the terminal) can be found. It can be seen that, using the technical solution in the embodiment, the determination of the preset netowrk connection device becomes more accurate, and the situation where other netowrk connection devices have the same netowrk name as that of the preset netowrk connection device can be avoided. Thus, the network side can accurately determine whether the terminal is in the proximity of the preset netowrk connection device corresponding to the terminal, and if the terminal is in the proximity of the preset network connection device corresponding to the terminal, the network side can timely notify the user so that the terminal can access the preset network connection device corresponding to the terminal. Consequently, user experience when using networks is improved.

In an embodiment, after determinging the preset netowrk connection device according to the above method, matching between the first netowrk infromaiton and the second netowrk informaiton corresponding to the preset netowrk connection device can be performed. Thus, the above step S12 may be implemented by the following steps: determining whether network identities in the second network information contain a network identity in the first network information; and if the network identities in the second network information contain the network identity in the first network information, determining that the first network information matches the pre-stored second network information. The netowrk identities may the netowrk names, or may be netowrk addresses, for example, MAC addressess or IP addressess. When the netowrk identities in the second netowrk informiaton contain the netowrk identity in the first network informaiton, it is indicated that the netowrk connection device to which the terminal is currenlty connected happens to be one nctowrkconncction device in the proximity of the preset netowrk connection device, and it is further indicated that the terminal is currently in the proximity of the preset network connection device.

In an embodiment, the above step S13 may be implemented by the following steps: determining whether a network signal strength of the preset network connection device is greater than a network signal strength of the network connection device which the terminal is currently connected to; and if the network signal strength of the preset network connection device is greater than the network signal strength of the network connection device which the terminal is currently connected to, sending the terminal the notification information. In the embodiment, the network side sends the notification information to the terminal only if the network signal strength of the preset network connection device is greater than the network signal strength of the network connection device which the terminal is currently connected to. The embodiment can avoid the situation where the terminal accesses a preset network connection device having a weak network signal strength, and thus can guarantee the signal strength of the network connections performed by the terminal. Consequently, user experience when using networks is improved.. Further, a signal strength threshold may be set in advanced. The lowest standard of the signal strength threhold is a signal strength value allowing the terminal to perform normal network communications. When the netowrk side determines that the terminal is in the proximity of the preset netowrk connection device, the terminal firstly determines whether the signal strength of the preset netowrk connection device meets the preset signal strength threshold; when the signal strength of the preset network connection device meets the preset signal strength threshold, the netowrk side sends the terminal the notification information for notifying the therminal that the terminal can access the preset network connection device corresponding to the terminal; otherwise, the netowrk side does not send the notification information.

In an embodiment, the above methods may further include: sending the terminal third network information of the preset network connection device which includes one or more of a network name and a network password of the preset network connection device. In the embodiment, because the netowrk information of the present netowrk connection devices prestored in the terminal may be modified by the user at any time, the netowrk informaiton of the preset netowrk connection device stored at the netowrk side is more accureate as compared with the netowrk informaiton prestored in the terminal. Thus, the netowrk sends the terminal the netowrk informaiton of the preset netowrk connection devices to guarantee that the termianl can accurately access the preset netowrk connection device by the netowrk informaiton. Thus, the netowrk connection of the terminal is ensured and thereby user experience is improved.

In the technical solution provided by embodiments of the present disclsoure, matching between network information of a network connection device which a terminal is currently connected to and network information of a network connection device within a preset range of a preset network connection device corresponding to the terminal is performed. Thus, if the terminal is in the proximity of the preset network connection device corresponding to the terminal, the network side can timely notify the terminal so that the terminal can access the preset network connection device corresponding to the terminal. Consequently, user experience when using networks is improved, and especially, the speed for accessing data in the preset network connection device is increased.

### Terminal Side

Fig. 6 is a flowchart showing a method for netowrk connection according to an exemplary embodiment. As shown in Fig. 6, the method for netowrk connection is applied in a terminal which may be a mobile phone, a computer, a digital broadcast terminal, a messaging device, a gaming console, a tablet, a medical device, exercise equipment, a personal digital assistant, and the like. The method includes the following steps S61-S63.

In step S61, first network information of a network connection device which the terminal is currently connected to is sent to a network side.

In step S62, if first notification information sent from the network side is received, second network information of a preset network connection device corresponding to the terminal is obtained. The first notification information is configured to notify the terminal that the terminal can be connected to the preset network connection device, and the second network information includes one or more of a network name and a network password of the preset network connection device.

In the step, the terminal may obtain the second netowrk information via the following two approaches: (1) obtaining the second netowrk informaiton of the present netowrk connection device corresponding to the terminal which is pre-stored in the terminal; or (2) obtaining the second netowrk information of the preset network connection device corresponding to the terminal from the network side.

In step S63, the preset network connection device is accessed according to the second network information.

In an embodiment, step S62 may be implemented by the following stesp: sending second notification information for inquiring whether to access the preset network connection device; and if receiving a confirmation operation for the second notification information, accessing the preset network connection device according to the second network information. In the embodiment, whether to connect to the preset netowrk connection device is determined according to user's selection, user engagement is increased and thus user experience during netowrk communications by the terminal is improved.

In the techncial solution provided by embodiments of the present disclsoure, when obtaining the notification information sent from the network side, the terminal can access the preset network connection device corresponding to the terminal. Thus, when the terminal is in the proximity of the preset network connection device corresponding to the terminal, the terminal can timely access the preset network connection device. In this way, the technical solution can improve the states of network connection of the terminal, and can avoid the situation where when the terminal is in the proximity of the preset network connection device, the terminal uses external network connection. Consequently, user experience when using networks is improved, and especially the speed for accessing data in the preset network connection device by the terminal is increased.

### Preset Network Connection Device Side

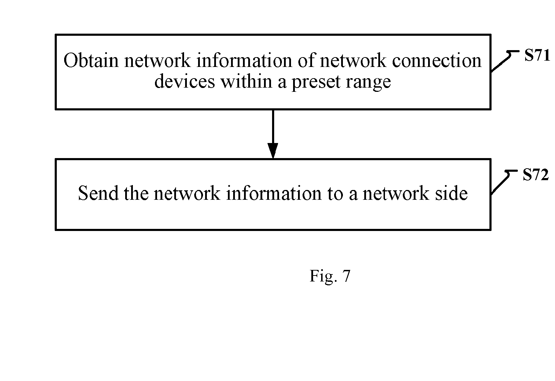

Fig. 7 is a flowchart showing a method for netowrk connection according to an exemplary embodiment. As shown in Fig. 7, the method for netowrk connection is applied in a preset netowrk connection device such as a prest router, and includes the following steps S71-S72.

In step S71, network information of network connection devices within a preset range is obtained.

In the step, the preset netowrk connection device can periodically obtain the netowrk indormaiton of the netowrk connection device within a preset range. For example, the preset netowrk connection device can obtain the netowrk informiaton of the network connection devices within the preset range at a fixed time every day to deal with the situation where the surrounding netowrk connection devices change.

In step S72, the network information is sent to a network side.

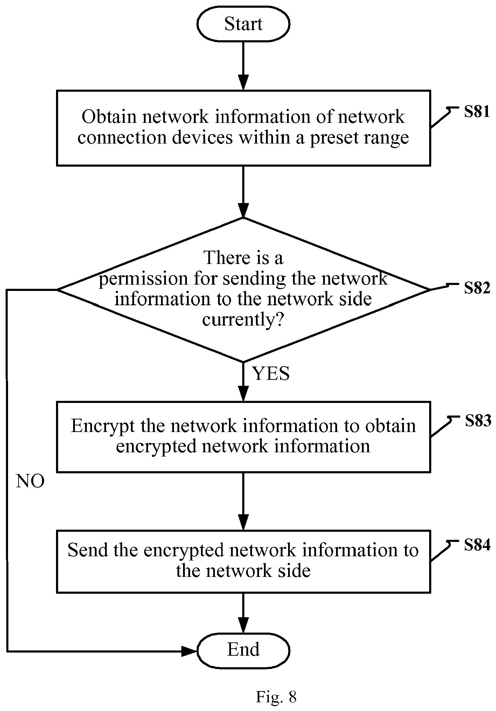

In an embodiment, when the preset network connection sends the netowrk informaiton to the netowrk side, the preset netwrok connection deivce needs to determine whether the preset network connection device has the sending permission. The preset netwrok connection deivce sends the netowrk informiaton to the netowrk side only if the preset netwrok connection deivce has the permission. Thus, the security of the netowrk informaiton of the netowrk connection device can be increased. Further, the netowrk informiaton may be encryted, and the encrypted netowrk informiaton can be sent to the netowrk side. This can also increase the security of the network informaiton of the netowrk connection device. As shown in Fig. 8, the above method may be implemented by the following steps S81-S84.

In step S81, network information of network connection devices within a preset range is obtained.

In step S82, whether there is a permission for sending the network information to the network side currently is determined. If it is determined that the preset network connection device has the permission for currently sending the network information to the network side, step S83 is performed. If it is determined that the preset network connection device does not have the permission for currently sending the network information to the network side, the flowchart ends.

In step S83, the network information is encrypted to obtain encrypted network information.

In step S84, the encrypted network information is sent to the network side.

In the technical solution provided by emobdiments of the presnet disclsoure, network information of network connection devices within a preset range is obtained, and the network information is sent to a network side, so that the network side can determine whether a terminal corresponding to a preset network connection device is in the proximity of the preset network connection device according to the received network information. If the terminal corresponding to the preset network connection device is in the proximity of the preset network connection device, the network side can timely notify the terminal to make the terminal access the preset network connection device corresponding to the terminal. Thus, user experience when using networks is improved, and especially the speed for accessing data in the preset network connection device by the terminal is increased.

The method for network connection provided by the present disclsoure will be explained using a specific example.

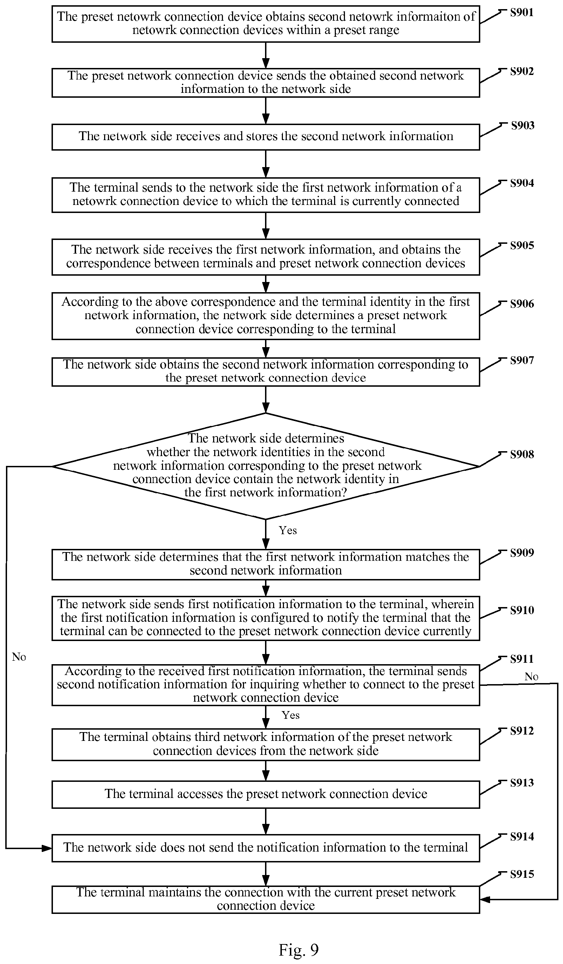

Fig. 9 is a flowchart showing a method for netowrk connection according to a specific exemplary embodiment. In the embodiment, the method for network connection involves three parties, i.e., a netowrk side, a terminal and a preset netowrk connection device such as a preset router. In the database at the netowrk side, a correspondance between terminals and preset netowrk connection devices are pre-stored. As shown in Fig. 9, the method for network connection includes the following steps S901-S915.

In step S901, the preset netowrk connection device obtains second netowrk informaiton of netowrk connection devices within a preset range.

In step S902, the preset netowrk connection device sends the obtained second network information to the network side. The second netowrk information includes netowrk identities which are netowrk names or network addressess.

In step S903, the network side receives and stores the second network information.

In step S904, the terminal sends to the network side the first netowrk information of a network connection device to which the terminal is currently connected. The first netowrk information includes a terminal identity, and a netowrk identity which is a network name or a netowrk address.

In step S905, the network side receives the first network information, and obtains the correspondence between terminals and preset network connection devices.

In step S906, according to the above correspondence and the terminal identity in the first network information, the network side determines a preset network connection device corresponding to the terminal.

In step S907, the network side obtains the second network information corresponding to the preset network connection device.

In step S908, the network side determines whether the network identities in the second network information corresponding to the preset network connection device contain the network identity in the first network information. If the network identities in the second network information corresponding to the preset network connection device contain the network identity in the first network information, step S909 is performed. If the network identities in the second network information corresponding to the preset network connection device do not contain the network identity in the first network information, step S914 is performed.

In step S909, the network side determines that the first network information matches the second network information.

In step S910, the network side sends first notification information to the terminal. The first notification information is configured to notify the terminal that the terminal can be connected to the preset network connection device currently.

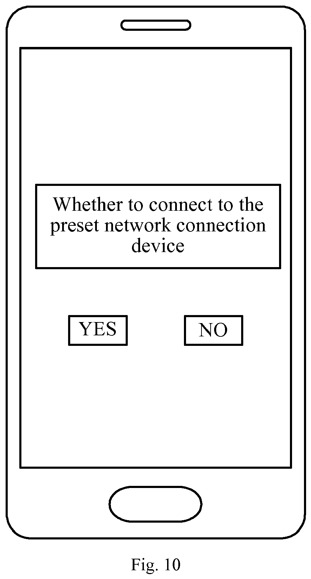

In step S911, according to the received first notification information, the terminal sends second notification information for inquiring whether to connect to the preset network connection device. As shown in Fig. 10, the terminal displays the second notification "Whether to connect to the preset network connection device" on a current screen, and displays "YES" and "NO" options for the second notification information. When receiving a selection operation by the user for the "YES" option, step S912 is performed; when receiving the selection operation by the user for the "NO" option, step S915 is performed.

In step S912, the terminal obtains third network information of the preset network connection devices from the network side. The third network information includes the network names and network passwords of the present network connection devices.

In step S913, the terminal accesses the preset network connection device.

In step S914, the network side does not send the notification information to the terminal.

In step S915, the terminal maintains the connection with the current preset network connection dcvicc.

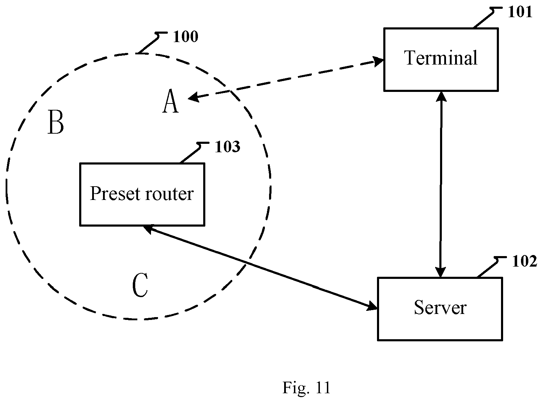

For example, a preset network connection device corresponding to a terminal 101 is a preset router 103, and the terminal 101 is connected to a network connection device A. The preset router 103 periodically detects and obtains network information of network connection devices within a preset range, for example, within 20 meters. As shown in Fig. 11, the region circled by a dot-line circle 100 represents the region within the preset range of the preset router 103. The preset router 103 can detect that there are the network connection device A, and network connection devices B and C within the preset range, and obtain the network information (including the network names) of the network connection devices A, B and C, and send the obtained network information to a server 102 at the network side. After receiving from the terminal 101 the network information (including the network name) of the device A to which the terminal 101 is currently connected, the server 102 matches the network information of the device A with the network information of the network connection devices A, B and C sent from the preset router 103. By comparing the network names in the network information, the server 102 determines that the network information of the network connection devices A, B and C sent from the preset router 103 includes the network information of the device A, and thereby determines that the terminal 101 is in the vicinity of the preset router 103, and sends the terminal 101 the notification information for notifying the terminal 101 that the terminal 101 can access the preset router 103 currently.

In the technical solution provided by the present embodiment, when a terminal is in the proximity of a router corresponding to the terminal, a server can timely notify the terminal so that the terminal can access the router corresponding to the terminal. Then, the terminal can access the data in the router via internal networks. As compared with the network connections via other network connection devices, accessing of the router data via internal network is relatively fast and thus user experience when using networks is improved.

Embodiments of devices of the present disclosure, which may be used for performing the embodiments of the methods of the present disclosure, will be described below.

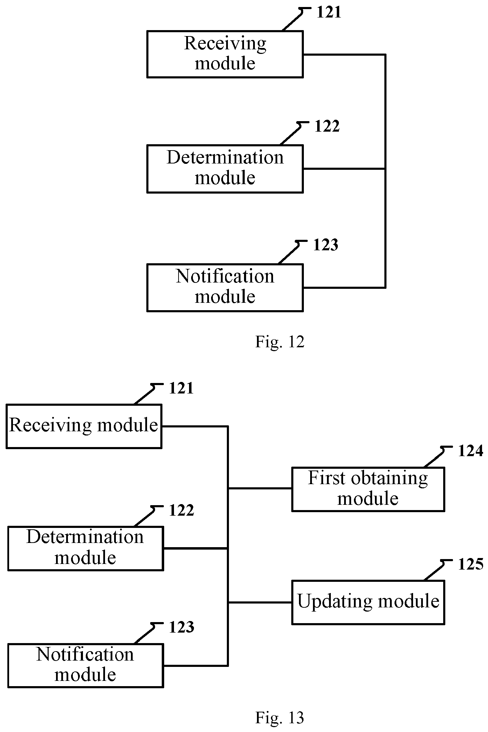

Fig. 12 is a block diagram showing an apparatus for network connection according to an exemplary embodiment. The apparatus may be implemented as a part or whole of an electronic device with software, hardware or the both. Referring to Fig. 12, the apparatus for network connection is applied at a network side and includes a receiving module 121, a determination module 122 and a notification module 123.

The receiving module 121 is configured to receive first network information of a network connection device which a terminal is currently connected to.

The determination module 122 is configured to determine whether the first network information matches pre-stored second network information which is network information of a network connection device within a preset range of a preset network connection device corresponding to the terminal.

The notification module 123 is configured to, if the first network information matches the second network information, send the terminal notification information for notifying the terminal that the terminal can be connected to the preset network connection device currently.

In an embodiment, as shown in Fig. 13, the device further includes a first obtaining module 124 and an updating module 125.

The first obtaining module 124 is configured to periodically obtain the second network information sent from the preset network connection device.

The updating module 125 is configured to update the second network information.

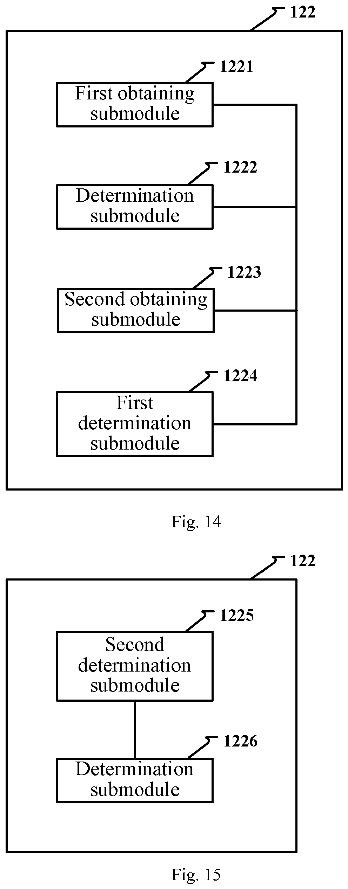

In an embodiment, as shown in Fig. 14, the determination module 122 includes a first obtaining submodule 1221, a determination submodule 1222, a second obtaining submodule 1223 and a first determination submodule 1224.

The first obtaining submodule 1221 is configured to obtain a correspondence between terminals and preset network connection devices.

The determination submodule 1222 is configured to determine the preset network connection device corresponding to the terminal according to the correspondence.

The second obtaining submodule 1223 is configured to obtain the second network information corresponding to the preset network connection device.

The first determination submodule 1224 is configured to determine whether the first network information matches the pre-stored second network information corresponding to the preset network connection dcvicc.

In an embodiment, the determination submodule 1222 is configured to, if the correspondence is a correspondence between identities of terminals and network names of preset network connection devices and the first network information includes an identity of the terminal, determine a network name corresponding to the identity of the terminal according to the correspondence, and search a network connection device having the network name, and determine the network connection device having the network name as the preset network connection device.

In an embodiment, the determination submodule 1222 is further configured to, if there are at least two network connection devices have the network name, determine matching degrees between the at least two network connection devices and the terminal, and according to the matching degrees, determine the preset network device corresponding to the terminal among the at least two network connection devices.

In an embodiment, the determination submodule 1222 is further configured to obtain historical records of network connections performed by the terminal via the at least two network connection devices, and according to the historical records, determine connection parameters of the network connections performed by the terminal via the at least two network connection devices, wherein the connection parameters include at least one of number of times of connection, connection frequency, and connection speed, and according to the connection parameters, determine the matching degrees between the at least two network connection devices and the terminal.

In an embodiment, the determination submodule 1222 is configured to, if the correspondence is a correspondence between identities of terminals and network addresses of preset network connection devices and the first network information includes an identity of the terminal, determine a network address corresponding to the identity of the terminal according to the correspondence, and search the preset network connection device corresponding to the terminal according to the network address.

In an embodiment, as shown in Fig. 15, the determination module 122 includes a second determination submodule 1225 and a determination submodule 1226.

The second determination submodule 1225 is configured to determine whether network identities in the second network information contain a network identity in the first network information, wherein the first network information and the second network information include network identities which are network names or network addresses.

The determination submodule 1226 is configured to, if the network identities in the second network information contain the network identity in the first network information, determine that the first network information matches the pre-stored second network information.

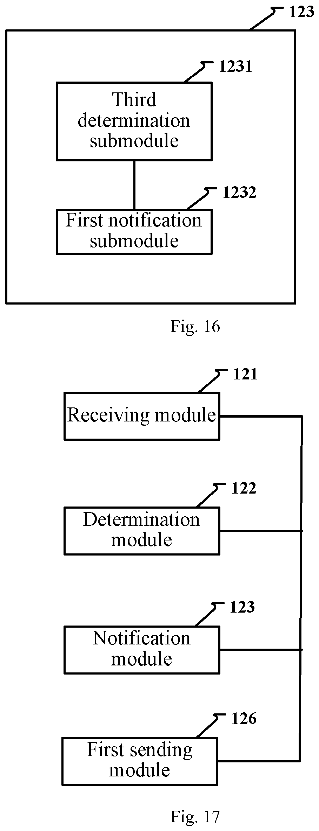

In an embodiment, as shown in Fig. 16, the notification module 123 includes a third determination submodule 1231 and a first notification submodule 1232.

The third determination submodule 1231 is configured to determine whether a network signal strength of the preset network connection device is greater than a network signal strength of the network connection device which the terminal is currently connected to.

The first notification submodule 1232 is configured to, if the network signal strength of the preset network connection device is greater than the network signal strength of the network connection device which the terminal is currently connected to, send the terminal the notification information.

In an embodiment, as shown in Fig. 17, the device further includes a first sending module 126.

The first sending module 126 is configured to send the terminal third network information of the preset network connection device which includes at least one of a network name and a network password of the preset network connection device.

In the devices provided by embodiments of the present disclosure, matching between network information of a network connection device which a terminal is currently connected to and network information of a network connection device within a preset range of a preset network connection device corresponding to the terminal is performed. Thus, if the terminal is in the proximity of the preset network connection device corresponding to the terminal, the network side can timely notify the terminal so that the terminal can access the preset network connection device corresponding to the terminal. Consequently, user experience when using networks is improved, and especially, the speed for accessing data in the preset network connection device is increased.

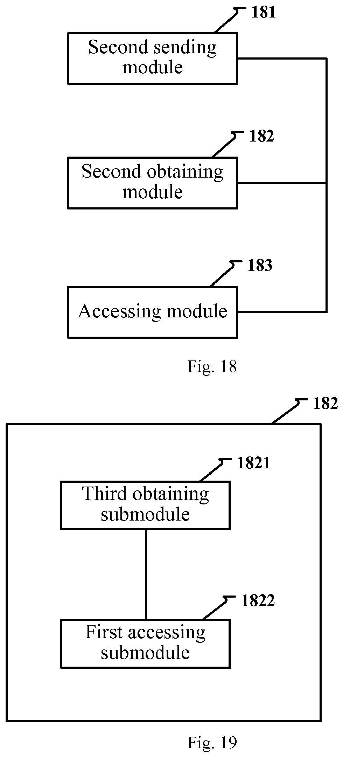

Fig. 18 is a block diagram showing an apparatus for network connection according to an exemplary embodiment. The apparatus may be implemented as a part or whole of an electronic device with software, hardware or the both. Referring to Fig. 18, the apparatus for network connection is applied in a terminal, and includes a second sending module 181, a second obtaining module 182 and an accessing module 183.

The second sending module 181 is configured to send a network side first network information of a network connection device which the terminal is currently connected to.

The second obtaining module 182 is configured to, if first notification information sent from the network side is received, obtain second network information of a preset network connection device corresponding to the terminal, wherein the first notification information is configured to notify the terminal that the terminal can be connected to the preset network connection device, and the second network information includes at least one of a network name and a network password of the preset network connection device.

The accessing module 183 is configured to access the preset network connection device according to the second network information.

In an embodiment, as shown in Fig. 19, the second obtaining module 182 includes a third obtaining submodule 1821 or a first accessing submodule 1822.

The third obtaining submodule 1821 is configured to obtain pre-stored second network information of the preset network connection device corresponding to the terminal.

The first accessing submodule 1822 is configured to obtain the second network information of the preset network connection device corresponding to the terminal from the network side.

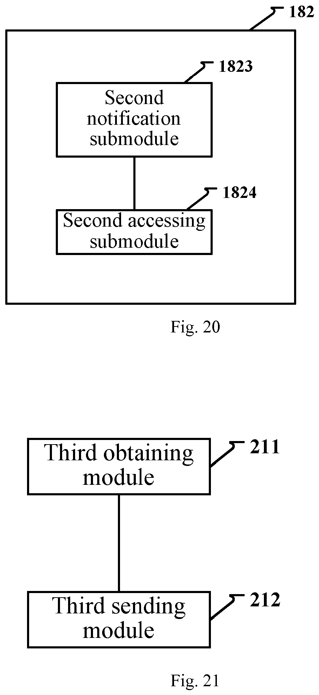

In an embodiment, as shown in Fig. 20, the second obtaining module 182 includes a second notification submodule 1823 and a second accessing submodule 1824.

The second notification submodule 1823 is configured to send second notification information for inquiring whether to access the preset network connection device.

The second accessing submodule 1824 is configured to, if a confirmation operation for the second notification information is received, access the preset network connection device according to the second network information.

In the device provided by embodiments of the present disclosure, when obtaining the notification information sent from the network side, the terminal can access the preset network connection device corresponding to the terminal. Thus, when the terminal is in the proximity of the preset network connection device corresponding to the terminal, the terminal can timely access the preset network connection device. In this way, the technical solutions can improve the states of network connection of the terminal, and can avoid the situation where when the terminal is in the proximity of the preset network connection device, the terminal uses external network connection. Consequently, user experience when using networks is improved, and especially the speed for accessing data in the preset network connection device by the terminal is increased.

Fig. 21 is a block diagram showing an apparatus for network connection according to an exemplary embodiment. The apparatus may be implemented as a part or whole of an electronic device with software, hardware or the both. Reference to Fig. 21, the apparatus for network connection may be applied in a preset network connection device, and includes a third obtaining module 211 and a third sending module 212.

The third obtaining module 211 is configured to obtain network information of network connection devices within a preset range.

The third sending module 212 is configured to send the network information to a network side.

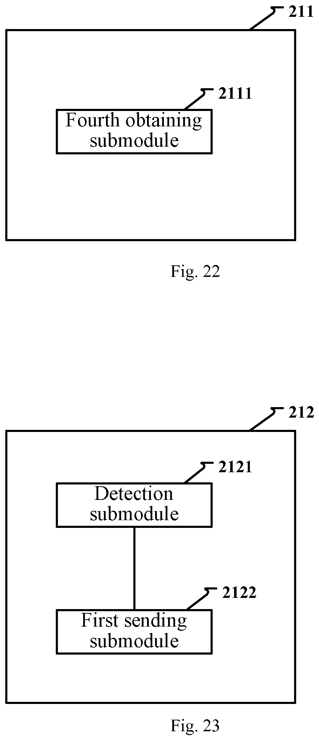

In an embodiment, as shown in Fig. 22, the third obtaining module 211 includes a fourth obtaining submodule 2111.

The fourth obtaining submodule 2111 is configured to periodically obtain the network information of network connection devices within the preset range.

In an embodiment, as shown in Fig. 23, the third sending module 212 includes a detection submodule 2121 and a first sending submodule 2122.

The detection submodule 2121 is configured to detect whether the network connection devices within the preset range change.

The first sending submodule 2122 is configured to, if it is detected that the network connection devices within the preset range change, send the network information to the network side.

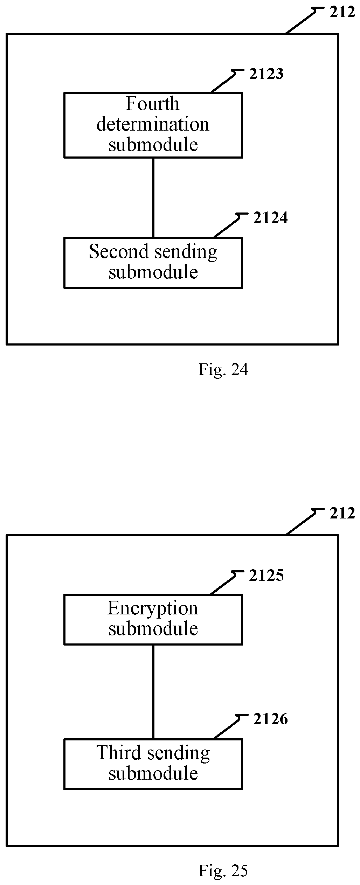

In an embodiment, as shown in Fig. 24, the third sending module 212 includes a fourth determination submodule 2123 and a second sending submodule 2124.

The fourth determination submodule 2123 is configured to determine whether there is a permission for sending the network information to the network side currently.

The second sending submodule 2124 is configured to, if it is determined that there is the permission, send the network information to the network side.

In an embodiment, as shown in Fig. 25, the third sending module 212 includes an encryption submodule 2125 and a third sending submodule 2126.

The encryption submodule 2125 is configured to encrypt the network information to obtain encrypted network information.

The third sending submodule 2126 is configured to send the encrypted network information to the network side.

In the device provided by embodiments of the present disclosure, network information of network connection devices within a preset range is obtained, and the network information is sent to a network side, so that the network side can determine whether a terminal corresponding to a preset network connection device is in the proximity of the preset network connection device according to the received network information. If the terminal corresponding to the preset network connection device is in the proximity of the preset network connection device, the network side can timely notify the terminal to make the terminal access the preset network connection device corresponding to the terminal. Thus, user experience when using networks is improved, and especially the speed for accessing data in the preset network connection device by the terminal is increased.

In an exemplary embodiment, there is provided an apparatus for network connection, applied at a network side and including:
a processor; and
a memory for storing instructions executable by the processor;
wherein the processor is configured to:
receive first network information of a network connection device which a terminal is currently connected to;
determine whether the first network information matches pre-stored second network information which is network information of a network connection device within a preset range of a preset network connection device corresponding to the terminal; and
if the first network information matches the second network information, send the terminal notification information for notifying the terminal that the terminal can be connected to the preset network connection device currently.

The processor is further configured to:
periodically obtain the second network information sent from the preset network connection device; and
update the second network information.

The processor is configured to:
obtain a correspondence between terminals and preset network connection devices;
determine the preset network connection device corresponding to the terminal according to the correspondence;
obtain the second network information corresponding to the preset network connection device; and
determine whether the first network information matches the pre-stored second network information corresponding to the preset network connection device.

The processor is configured to:
If the correspondence is a correspondence between identities of terminals and network names of preset network connection devices and the first network information includes an identity of the terminal, determine a network name corresponding to the identity of the terminal according to the correspondence; and
search a network connection device having the network name, and determine the network connection device having the network name as the preset network connection device.

The processor is configured to:
if there are at least two network connection devices have the network name, determine matching degrees between the at least two network connection devices and the terminal; and
according to the matching degrees, determine the preset network device corresponding to the terminal among the at least two network connection devices.

The processor is configured to:
obtain historical records of network connections performed by the terminal via the at least two network connection devices;
according to the historical records, determine connection parameters of the network connections performed by the terminal via the at least two network connection devices, wherein the connection parameters include at least one of number of times of connection, connection frequency, and connection speed; and
according to the connection parameters, determine the matching degrees between the at least two network connection devices and the terminal.

The processor is configured to:
if the correspondence is a correspondence between identities of terminals and network addresses of preset network connection devices and the first network information includes an identity of the terminal, determine a network address corresponding to the identity of the terminal according to the correspondence; and
search the preset network connection device corresponding to the terminal according to the network address.

The processor is configured to:
if the first network information and the second network information include network identities which are network names or network addresses, determine whether network identities in the second network information contain a network identity in the first network information; and
if the network identities in the second network information contain the network identity in the first network information, determine that the first network information matches the pre-stored second network information.

The processor is configured to:
determine whether a network signal strength of the preset network connection device is greater than a network signal strength of the network connection device which the terminal is currently connected to; and
if the network signal strength of the preset network connection device is greater than the network signal strength of the network connection device which the terminal is currently connected to, send the terminal the notification information.

The processor is further configured to:
send the terminal third network information of the preset network connection device which includes at least one of a network name and a network password of the preset network connection device.

In an exemplary embodiment, there is provided an apparatus for network connection, applied in a terminal and including:
a processor; and
a memory for storing instructions executable by the processor;
wherein the processor is configured to:
send a network side first network information of a network connection device which the terminal is currently connected to;
if receive first notification information sent from the network side, obtain second network information of a preset network connection device corresponding to the terminal, wherein the first notification information is configured to notify the terminal that the terminal can be connected to the preset network connection device, and the second network information includes at least one of a network name and a network password of the preset network connection device; and
access the preset network connection device according to the second network information.

The processor is configured to:
obtain pre-stored second network information of the preset network connection device corresponding to the terminal; or
obtain the second network information of the preset network connection device corresponding to the terminal from the network side.

The processor is configured to:
send second notification information for inquiring whether to access the preset network connection device; and
if a confirmation operation for the second notification information is received, access the preset network connection device according to the second network information.

In an exemplary embodiment, there is provided an apparatus for network connection, applied in a preset network connection device and including:
a processor; and
a memory for storing instructions executable by the processor;
wherein the processor is configured to:
obtain network information of network connection devices within a preset range; and
send the network information to a network side.

The processor is configured to:
periodically obtain the network information of network connection devices within the preset range.

The processor is configured to:
detect whether the network connection devices within the preset range change; and
if it is detected that the network connection devices within the preset range change, send the network information to the network side.

The processor is configured to:
determine whether there is a permission for sending the network information to the network side currently; and
if it is determined that there is the permission, send the network information to the network side.

The processor is configured to:
encrypt the network information to obtain encrypted network information; and
send the encrypted network information to the network side.

With respect to the devices in the above embodiments, the specific manners for performing operations for individual modules therein have been described in detail in the embodiments regarding the methods, which will not be elaborated herein.

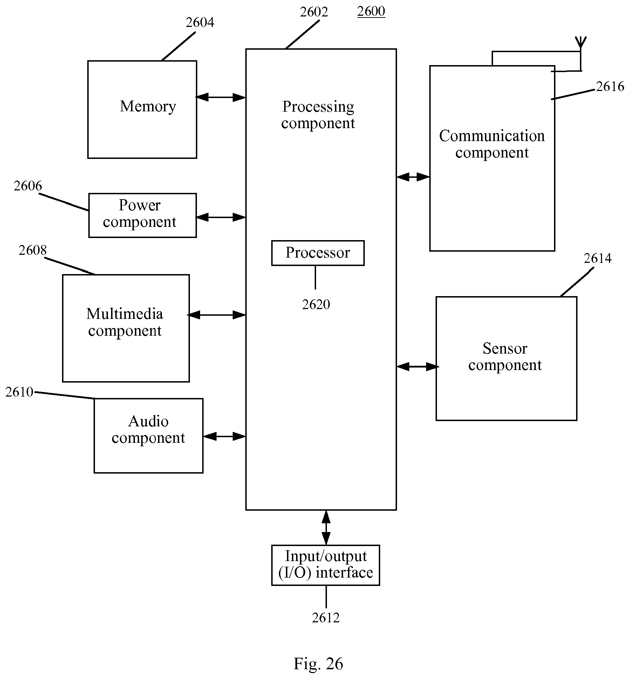

Fig. 26 is a block diagram of an apparatus for netowrk connection according to an exemplary embodiment. For example, the apparatus 2600 may be a mobile phone, a computer, a digital broadcast terminal, a messaging device, a gaming console, a tablet, a medical device, exercise equipment, a personal digital assistant, and the like.

The apparatus 2600 may include one or more of the following components: a processing component 2602, a memory 2604, a power component 2606, a multimedia component 2608, an audio component 2610, an input/output (I/O) interface 2612, a sensor component 2614, and a communication component 2616.

The processing component 2602 typically controls overall operations of the apparatus 2600, such as the operations associated with display, telephone calls, data communications, camera operations, and recording operations. The processing component 2602 may include one or more processors 2620 to execute instructions to perform all or part of the steps in the above described methods. Moreover, the processing component 2602 may include one or more modules which facilitate the interaction between the processing component 2602 and other components. For instance, the processing component 2602 may include a multimedia module to facilitate the interaction between the multimedia component 2608 and the processing component 2602.

The memory 2604 is configured to store various types of data to support the operation of the apparatus 2600. Examples of such data include instructions for any applications or methods operated on the apparatus 2600, contact data, phonebook data, messages, pictures, video, etc. The memory 2604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2606 provides power to various components of the apparatus 2600. The power component 2606 may include a power management system, one or more power sources, and any other components associated with the generation, management, and distribution of power in the apparatus 2600.

The multimedia component 2608 includes a screen providing an output interface between the apparatus 2600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2608 includes a front camera and/or a rear camera. The front camera and the rear camera may receive an external multimedia datum while the apparatus 2600 is in an operation mode, such as a photographing mode or a video mode. Each of the front camera and the rear camera may be a fixed optical lens system or have focus and optical zoom capability.

The audio component 2610 is configured to output and/or input audio signals. For example, the audio component 2610 includes a microphone ("MIC") configured to receive an external audio signal when the apparatus 2600 is in an operation mode, such as a call mode, a recording mode, and a voice recognition mode. The received audio signal may be further stored in the memory 2604 or transmitted via the communication component 2616. In some embodiments, the audio component 2610 further includes a speaker to output audio signals.

The I/O interface 2612 provides an interface between the processing component 2602 and peripheral interface modules, such as a keyboard, a click wheel, buttons, and the like. The buttons may include, but are not limited to, a home button, a volume button, a starting button, and a locking button.

The sensor component 2614 includes one or more sensors to provide status assessments of various aspects of the apparatus 2600. For instance, the sensor component 2614 may detect an open/closed status of the apparatus 2600, relative positioning of components, e.g., the display and the keypad, of the apparatus 2600, a change in position of the apparatus 2600 or a component of the apparatus 2600, a presence or absence of user contact with the apparatus 2600, an orientation or an acceleration/deceleration of the apparatus 2600, and a change in temperature of the apparatus 2600. The sensor component 2614 may include a proximity sensor configured to detect the presence of nearby objects without any physical contact. The sensor component 2614 may also include a light sensor, such as a CMOS or CCD image sensor, for use in imaging applications. In some embodiments, the sensor component 2614 may also include an accelerometer sensor, a gyroscope sensor, a magnetic sensor, a pressure sensor, or a temperature sensor.

The communication component 2616 is configured to facilitate communication, wired or wirelessly, between the apparatus 2600 and other devices. The apparatus 2600 can access a wireless network based on a communication standard, such as WiFi, 2G, or 3G, or a combination thereof. In one exemplary embodiment, the communication component 2616 receives a broadcast signal or broadcast associated information from an external broadcast management system via a broadcast channel. In one exemplary embodiment, the communication component 2616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 2600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 2620 in the apparatus 2600, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium having stored therein instructions that, when executed by the processor of the apparatus 2600, causes the apparatus 2600 to perform the method for network connection, the method including:
sending a network side first network information of a network connection device which the terminal is currently connected to;
if receiving first notification information sent from the network side, obtaining second network information of a preset network connection device corresponding to the terminal, wherein the first notification information is configured to notify the terminal that the terminal can be connected to the preset network connection device, and the second network information includes at least one of a network name and a network password of the preset network connection device; and
accessing the preset network connection device according to the second network information.

The obtaining the second network information of the preset network connection device corresponding to the terminal, includes:
obtaining pre-stored second network information of the preset network connection device corresponding to the terminal; or
obtaining the second network information of the preset network connection device corresponding to the terminal from the network side.

The obtaining the second network information of the preset network connection device corresponding to the terminal, includes:
sending second notification information for inquiring whether to access the preset network connection device; and
if receiving a confirmation operation for the second notification information, accessing the preset network connection device according to the second network information.

There is provided a non-transitory computer-readable storage medium having stored therein instructions that, when executed by the processor of the apparatus 2600, causes the apparatus 2600 to perform the method for network connection, the method including:
obtaining network information of network connection devices within a preset range; and
sending the network information to a network side.
the obtaining the network information of the network connection devices within the preset range, includes:
   periodically obtaining the network information of network connection devices within the preset range.
   the sending the network information to the network side, includes:
      detecting whether the network connection devices within the preset range change; and
      if detecting that the network connection devices within the preset range change, sending the network information to the network side.
      The sending the network information to the network side, includes:
         determining whether there is a permission for sending the network information to the network side currently; and
         if determining that there is the permission, sending the network information to the network side.

The sending the network information to the network side, includes:
encrypting the network information to obtain encrypted network information; and
sending the encrypted network information to the network side.

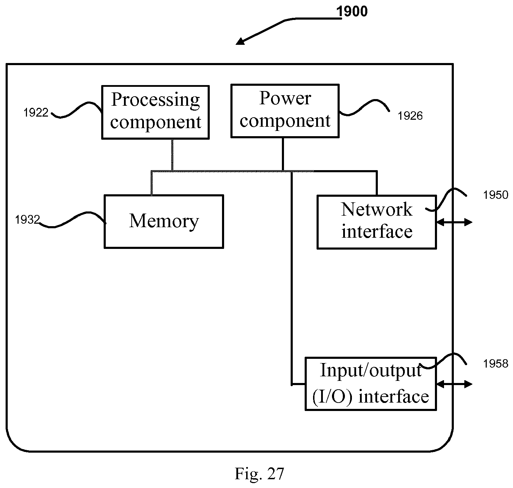

Fig. 27 is a block diagram showing an apparatus for network connection according to an exemplary embodiment. For example, the apparatus 1900 may be provided as a server. The apparatus 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above described method.

The apparatus 1900 may also include a power component 1926 configured to perform power management of the apparatus 1900, wired or wireless network interface(s) 1950 configured to connect the apparatus 1900 to a network, and an input/output (I/O) interface 1958. The apparatus 1900 may operate based on an operating system stored in the memory 1932, such as Windows Server^{™}, Mac OS X^{™}, Unix^{™}, Linux^{™}, FreeBSD^{™}, or the like.

There is provided a non-transitory computer-readable storage medium having stored therein instructions that, when executed by a processor of the apparatus 1900, causes the apparatus 1900 to perform a method for network connection, the method including
receiving first network information of a network connection device which a terminal is currently connected to;
determining whether the first network information matches pre-stored second network information which is network information of a network connection device within a preset range of a preset network connection device corresponding to the terminal; and
if the first network information matches the second network information, sending the terminal notification information for notifying the terminal that the terminal can be connected to the preset network connection device currently.

The method further includes:
periodically obtaining the second network information sent from the preset network connection device; and
updating the second network information.

The determining whether the first network information matches the pre-stored second network information, includes:
obtaining a correspondence between terminals and preset network connection devices;
determining the preset network connection device corresponding to the terminal according to the correspondence;
obtaining the second network information corresponding to the preset network connection dcvicc; and
determining whether the first network information matches the pre-stored second network information corresponding to the preset network connection device.

The correspondence is a correspondence between identities of terminals and network names of preset network connection devices, and the first network information includes an identity of the terminal. The determining the preset network connection device corresponding to the terminal according to the correspondence, includes:
determining a network name corresponding to the identity of the terminal according to the correspondence; and
searching a network connection device having the network name, and determining the network connection device having the network name as the preset network connection device.

If there arc at least two network connection devices have the network name, the determining the preset network connection device corresponding to the terminal according to the correspondence, further includes:
determining matching degrees between the at least two network connection devices and the terminal; and
according to the matching degrees, determining the preset network device corresponding to the terminal among the at least two network connection devices.

The determining matching degrees between the at least two network connection devices and the terminal, includes:
obtaining historical records of network connections performed by the terminal via the at least two network connection devices;
according to the historical records, determining connection parameters of the network connections performed by the terminal via the at least two network connection devices, wherein the connection parameters include at least one of number of times of connection, connection frequency, and connection speed; and
according to the connection parameters, determining the matching degrees between the at least two network connection devices and the terminal.

The correspondence is a correspondence between identities of terminals and network addresses of preset network connection dcviccs, and the first network information includes an identity of the terminal. The determining the preset network connection device corresponding to the terminal according to the correspondence, includes:
determining a network address corresponding to the identity of the terminal according to the correspondence; and
searching the preset network connection device corresponding to the terminal according to the network address.

The first network information and the second network information include network identities which are network names or network addresses. The determining whether the first network information matches the prc-storcd second network information includes:
determining whether network identities in the second network information contain a network identity in the first network information; and
if the network identities in the second network information contain the network identity in the first network information, determining that the first network information matches the pre-stored second network information.

The sending the terminal the notification information includes:
determining whether a network signal strength of the preset network connection device is greater than a network signal strength of the network connection device which the terminal is currently connected to; and
if the network signal strength of the preset network connection device is greater than the network signal strength of the network connection device which the terminal is currently connected to, sending the terminal the notification information.

The method further includes:
sending the terminal third network information of the preset network connection device which includes at least one of a network name and a network password of the preset network connection device.

## Claims

1. A method for network connection, applied at a server and comprising:
receiving (S11) first network information comprising information of a first network connection device (A) to which a
terminal (101) is currently connected;
determining (S12) whether the first network information matches pre-stored second network information corresponding to a preset router corresponding to the terminal, wherein the pre-stored second network information comprises identities of one or more network connection devices (A, B, C) within a preset range of the preset router corresponding to the terminal (103); and
upon the first network information matching the pre-stored second network information, sending (S13) to the terminal (101) notification information for notifying the terminal (101) that the terminal (101) can be connected to the preset router (103);
wherein the determining (S12) whether the first network information matches the pre-stored second network information, comprises:
obtaining (S121) a correspondence between terminals and preset routers (103);
determining (S122) the preset router (103) corresponding to the terminal according to the correspondence;
obtaining (S123) the pre-stored second network information corresponding to the preset router (103); and
determining whether the network identities in the second network information contain a network identity in the first network information, wherein the network identities of the first network information and the pre-stored second network information comprise network identities which are network names; and
upon determining that the network identities in the second network information contain the network identity in the first network information, determining that the first network information matches the pre-stored second network information.

2. The method according to claim 1, wherein the sending (S13) the terminal the notification information comprises:
determining whether a network signal strength of the preset router is greater than a network signal strength of the first network connection device (A) to which the terminal is currently connected; and
if the network signal strength of the preset router is greater than the network signal strength of the first network connection device (A) to which the terminal is currently connected, sending the terminal the notification information.

3. The method according to claim 1, further comprising:
sending to the terminal a third network information of the preset router, wherein the third network information comprises at least one of a network name and a network password of the preset router.

## Patentansprüche

1. Verfahren für Netzwerkverbindung, angewendet an einem Server und umfassend:
Empfangen (S11) erster Netzwerkinformationen, die Informationen über eine erste Netzwerkverbindungsvorrichtung (A) umfassen, mit der ein Endgerät (101) aktuell verbunden ist;
Bestimmen (S12), ob die ersten Netzwerkinformationen mit vorgespeicherten zweiten Netzwerkinformationen, die einem dem Endgerät entsprechenden, voreingestellten Router entsprechen, übereinstimmen, wobei die vorgespeicherten zweiten Netzwerkinformationen Identitäten von ein oder mehr Netzwerkverbindungsvorrichtungen (A, B, C) innerhalb eines voreingestellten Bereichs des dem Endgerät (103) entsprechenden, voreingestellten Routers umfassen; und
bei Übereinstimmung der ersten Netzwerkinformationen mit den vorgespeicherten zweiten Netzwerkinformationen Senden (S13) von Benachrichtigungsinformationen an das Endgerät (101) zur Benachrichtigung des Endgeräts (101), dass das Endgerät (101) mit dem voreingestellten Router (103) verbunden werden kann;
wobei das Bestimmen (S12), ob die ersten Netzwerkinformationen mit den vorgespeicherten zweiten Netzwerkinformationen übereinstimmen, umfasst:
Erhalten (S121) einer Korrespondenz zwischen Endgeräten und voreingestellten Routern (103);
Bestimmen (S122) des dem Endgerät (103) entsprechenden, voreingestellten Routers (103) gemäß der Korrespondenz;
Erhalten (S123) der dem voreingestellten Router (103) entsprechenden vorgespeicherten zweiten Netzwerkinformationen; und
Bestimmen, ob die Netzwerkidentitäten in den zweiten Netzwerkinformationen eine Netzwerkidentität in den ersten Netzwerkinformationen enthalten, wobei die Netzwerkidentitäten der ersten Netzwerkinformationen und der vorgespeicherten zweiten Netzwerkinformationen Netzwerkidentitäten umfassen, die Netzwerknamen sind; und
bei Bestimmen, dass die Netzwerkidentitäten in den zweiten Netzwerkinformationen die Netzwerkidentität in den ersten Netzwerkinformationen enthalten, Bestimmen, dass die ersten Netzwerkinformationen mit den vorgespeicherten zweiten Netzwerkinformationen übereinstimmen.

2. Verfahren nach Anspruch 1, wobei das Senden (S13) der Benachrichtigungsinformationen an das Endgerät umfasst:
Bestimmen, ob eine Netzwerksignalstärke des voreingestellten Routers größer ist als eine Netzwerksignalstärke der ersten Netzwerkverbindungsvorrichtung (A), mit der das Endgerät aktuell verbunden ist; und,
wenn die Netzwerksignalstärke des voreingestellten Routers größer ist als die Netzwerksignalstärke der ersten Netzwerkverbindungsvorrichtung (A), mit der das Endgerät aktuell verbunden ist, Senden der Benachrichtigungsinformationen an das Endgerät.

3. Verfahren nach Anspruch 1, ferner umfassend:
Senden des Endgeräts an dritte Netzwerkinformationen des voreingestellten Routers, wobei die dritten Netzwerkinformationen wenigstens eines von einem Netzwerknamen und einem Netzwerkkennwort des voreingestellten Routers umfassen.

## Revendications

1. Procédé de connexion réseau, appliqué à un serveur et comprenant :
recevoir (S11) des premières informations réseau comprenant des informations d'un premier dispositif de connexion réseau (A) auquel un terminal (101) est actuellement connecté ;
déterminer (S 12) si les premières informations réseau concordent avec des deuxièmes informations réseau pré-stockées correspondant à un routeur pré-établi correspondant au terminal, dans lequel les deuxièmes informations réseau pré-stockées comprennent des identités d'un ou de plusieurs dispositifs de connexion réseau (A, B, C) dans une gamme pré-établie du routeur pré-établi correspondant au terminal (103) ; et
lorsque les premières informations réseau concordent avec les deuxièmes informations réseau pré-stockées, envoyer (S13) au terminal (101) des informations de notification pour notifier le terminal (101) que le terminal (101) peut être connecté au routeur pré-établi (103) ;
dans lequel le fait de déterminer (S12) si les premières informations réseau concordent avec les deuxièmes informations réseau pré-stockées, comprend :
obtenir (S121) une correspondance entre les terminaux et les routeurs pré-établis (103) ;
déterminer (S122) le routeur pré-établi (103) correspondant au terminal conformément à la correspondance ;
obtenir (S 123) les deuxièmes informations réseau pré-stockées correspondant au routeur pré-établi (103) ; et
déterminer si les identités de réseau dans les deuxièmes informations réseau contiennent une identité de réseau dans les premières informations réseau, dans lequel les identités de réseau des premières informations réseau et des deuxièmes informations réseau pré-stockées comprennent des identités de réseau qui sont des noms de réseau ; et
lors de la détermination que les identités de réseau dans les deuxièmes informations réseau contiennent l'identité de réseau dans les premières informations réseau, déterminer que les premières informations réseau concordent avec les deuxièmes informations réseau pré-stockées.

2. Procédé selon la revendication 1, dans lequel le fait d'envoyer (S13) au terminal les informations de notification comprend :
déterminer si une intensité de signal réseau du routeur pré-établi est plus grande qu'une intensité de signal réseau du premier dispositif de connexion réseau (A) auquel le terminal est actuellement connecté ; et
si l'intensité du signal réseau du routeur pré-établi est plus grande que l'intensité de signal réseau du premier dispositif de connexion réseau (A) auquel le terminal est actuellement connecté, envoyer au terminal les informations de notification.

3. Procédé selon la revendication 1, comprenant en outre :
envoyer au terminal des troisièmes informations réseau du routeur pré-établi, dans lequel les troisièmes informations réseau comprennent au moins un nom de réseau et un mot de passe réseau du routeur pré-établi.
